# EUROPÄISCHE PATENTSCHRIFT

(11) **EP 3 564 005 B1**
(45) Veröffentlichungstag und Bekanntmachung des Hinweises auf die Patenterteilung: **13.01.2021**
(21) Anmeldenummer: 18170447.9
(22) Anmeldetag: 02.05.2018
(51) Int. Cl.: B29C 48/685, B29C 48/76, B29B 7/42, B29B 7/48, B29B 7/60, B29B 7/74, B29B 7/84, B29C 48/00, B29C 48/04, B29C 48/05, B29C 48/12, B29C 48/38, B29C 48/41, B29B 9/06

(54) **MISCH- UND KNETMASCHINE, UND DEREN VERWENDUNG**
MIXING AND KNEADING DEVICE, AND ITS USE
MACHINE DE MÉLANGE ET DE MALAXAGE, ET SON UTILISATION

(43) Veröffentlichungstag der Anmeldung: 06.11.2019
(73) Patentinhaber: Buss AG, 4133 Pratteln (CH)
(72) Erfinder: SCHÖTZAU, Martin, 4302 Augst (CH); WALTER, Wolfgang, 73434 Aalen (DE)
(74) Vertreter: Henkel & Partner mbB

(56) Entgegenhaltungen:
- EP-A1- 0 082 494
- AT-A4- 510 263
- DE-A1- 2 120 601
- DE-C1- 4 209 179
- DE-T2- 69 212 748
- GB-A- 2 052 361
- US-A- 5 626 806

## Beschreibung

Die vorliegende Erfindung betrifft eine Misch- und Knetmaschine für kontinuierliche Aufbereitungsprozesse mit einer Eintrags- und Mischvorrichtung, die ein Gehäuse umfasst, welche einen hohlen Innenraum begrenzt, in dem eine rotierende und sich vorzugsweise gleichzeitig translatorisch bewegende Schneckenwelle angeordnet ist, sowie mit einer Austragsvorrichtung, wie beispielsweise einem Austragsextruder.

Derartige Misch- und Knetmaschinen werden insbesondere zum Aufbereiten von plastischen und/oder pastösen Massen eingesetzt. Beispielsweise dienen sie dem Verarbeiten von zähplastischen Massen, dem Homogenisieren und Plastifizieren von Kunststoffen, dem Einarbeiten von Füll- und Verstärkungsstoffen sowie dem Herstellen von Ausgangsmaterialien für die Lebensmittelindustrie. Die Schneckenwelle bildet hierbei das Arbeitsorgan, welches das zu verarbeitende Material in axialer Richtung vorwärts transportiert bzw. fördert und dabei die Komponenten des Materials miteinander vermischt.

Derartige Misch- und Knetmaschinen eignen sich insbesondere zum Herstellen von Polymergranulat, Polymerstrangpressprofilen, Polymerformteilen und dergleichen, wenn eine geeignete Austragsvorrichtung, wie beispielsweise ein Austragsextruder, eingesetzt wird und diese mit einer Granulationsvorrichtung oder einer ähnlichen Vorrichtung, wie mit einer intermittierenden Schneidvorrichtung, Strangdüse, Profilwerkzeug, Plattendüse oder einer ähnlichen Vorrichtung verbunden wird. Dabei wird durch die Eintrags- und Mischvorrichtung der Misch- und Knetmaschine eine homogene Polymerschmelze bzw. Mischung (beispielsweise von PVC, Gummi, Lebensmittel, Tierfutter, Pulverlack, halogenfreiem Flammschutzmittel, pharmazeutischen Stoffen etc.) erzeugt, welche dann in die Austragsvorrichtung und von dieser zu beispielsweise einer Granulationsvorrichtung gefördert wird. Beispielsweise werden die einzelnen Bestandteile der Mischung in dem vorderen Abschnitt der Eintrags- und Mischvorrichtung der Misch- und Knetmaschinen miteinander vermischt und homogenisiert und aus der so hergestellten homogenen Mischung eine Schmelze erzeugt (sofern wenigstens ein Bestandteil der Mischung schmelzfähig ist), wobei dasselbe in dem mittleren und in dem hinteren Abschnitt der Eintrags- und Mischvorrichtung geschieht. Die so erzeugte Schmelze wird dann durch die Austragsvorrichtung beispielsweise zu einer Unterwassergranulationsvorrichtung gefördert, in welcher die Schmelze mit beispielsweise 2 Millionen Pascal durch die Düsen einer Düsenplatte gepresst und direkt bei dem Austritt aus der Düsenplatte durch rotierende Messer zu Granulat geschnitten und durch über die Vorderseite der Düsenplatte fließendes Prozesswasser zu Granulatteilchen verfestigt wird. Alternativ dazu kann die Schmelze bzw. pastöse Mischung (wenn keine Schmelze erzeugt wird) auch durch ein Strangpress- oder Formteil-Werkzeug gepresst werden, um ein Polymerformteil herzustellen.

Die Eintrags- und Mischvorrichtungen solcher Misch- und Knetmaschinen sind beispielsweise aus der CH 278 575 A sowie aus der CH 464 656 bekannt.

Bei diesen Misch- und Knetmaschinen führt die Schneckenwelle der Eintrags- und Mischvorrichtung vorzugsweise nicht nur eine rotative Bewegung aus, sondern bewegt sich gleichzeitig auch in der axialen Richtung, d.h. in der Richtung der Schneckenwelle, translatorisch vor und zurück. Der Bewegungsablauf zeichnet sich daher vorzugsweise dadurch aus, dass die Schneckenwelle in der axialen Richtung gesehen eine der Rotation überlagerte oszillatorische Bewegung ausführt. Dieser Bewegungsablauf ermöglicht das Einbringen von Einbauten, nämlich von Knetelementen, wie von Knetbolzen oder von Knetzähnen, in das Gehäuse der Eintrags- und Mischvorrichtung. Wegen des Vorhandenseins der Knetbolzen oder der Knetzähne verläuft die auf der Hauptwelle, dem sogenannten Wellenstab, angeordnete Schnecke nicht - im Querschnitt des Wellenstabs gesehen - durchgehend, sondern ist in eine Mehrzahl von einzelnen Flügelelementen unterteilt, die sich jeweils über einen bestimmten Winkelabschnitt des Querschnittsumfangs des Wellenstabes erstrecken. Benachbarte Flügelelemente sind voneinander sowohl in axialer Richtung als auch in der Außenumfangsrichtung des Wellenstabes beabstandet, d.h. zwischen benachbarten Flügelelementen ist sowohl in axialer Richtung als auch in der Außenumfangsrichtung des Wellenstabes jeweils ein Spalt vorgesehen. Wenn beispielsweise der gesamte Wellenstab der Schneckenwelle oder ein axialer Abschnitt des Wellenstabs der Schneckenwelle, bezogen auf den Querschnittsumfang, drei Flügelelemente umfasst, welche sich jeweils über einen Winkelabschnitt von zum Beispiel 100° des Querschnittsumfangs des Wellenstabs erstrecken spricht man von einer dreiflügligen Schneckenwelle bzw. einem dreiflügligen Schneckenwellenabschnitt. Die Rotation und die translatorische Bewegung der Schneckenwelle in axialer Richtung werden so gesteuert, dass die einzelnen Flügelelemente mit ihren Flanken in die Nähe der entsprechenden Knetelemente gelangen, um das zu mischende und knetende Material zu verdichten und eine Scherwirkung auf dieses auszuüben, um so den Mischungs- und/oder Knetvorgang zu befördern, ohne dass die Knetelemente mit den Flügelelementen kollidieren. Abgesehen davon kommen die Knetelemente den Flanken der Flügelelemente so nahe, dass die Knetelemente Ablagerungen von Komponenten der Mischung auf den Flanken der Flügelelemente verhindert, so dass die Knetelemente im Ergebnis auch eine Reinigung der Flügelelemente bewirken. Natürlich muss die Anzahl und die Geometrie der Flügelelemente an die Anzahl der Knetelemente angepasst werden. Üblicherweise sind die einzelnen Knetelemente an der Innenumfangsfläche des Gehäuses der Eintrags- und Mischvorrichtung - in der axialen Richtung - in mehreren, auf die Geometrie und Anzahl der Flügelelemente abgestimmte und sich über zumindest einen Abschnitt der Innenumfangsfläche des Gehäuses erstreckenden Reihen angeordnet. Sind auf der Innenumfangsfläche des Gehäuses beispielsweise vier Reihen mit Knetelementen angeordnet, kann die Schneckenwelle auf deren Außenumfangsfläche - im Querschnitt gesehen - vier Flügelelemente aufweisen, zwischen denen jeweils ein genügend breiter Abstand vorsehen ist, damit sich die Knetelemente durch diese Abstände hindurchbewegen können.

Wie dargelegt, ist an dem - in Förderrichtung gesehen - stromabwärtigen Ende der Eintrags- und Mischvorrichtung der Misch- und Knetmaschine eine Austragsvorrichtung angeordnet, um die in der Eintrags- und Mischvorrichtung hergestellte homogene Mischung zur weiteren Verarbeitung aus der Eintrags- und Mischvorrichtung heraus und beispielsweise in eine weitere Verarbeitungsvorrichtung, wie beispielsweise eine Granulationsvorrichtung, hinein zu fördern. Zur Verbindung des Gehäuses der Eintrags- und Mischvorrichtung mit der Austragsvorrichtung, ist typischerweise an dem, in Förderrichtung gesehen, stromabwärtigen stirnseitigen Ende des Gehäuses der Eintrags- und Mischvorrichtung ein Verbindungselement angeordnet. In der Regel ist das Verbindungselement ein Flansch. Zweck des Verbindungselementes ist es, das stromabwärtige Ende des Gehäuses und die Eingangsseite der Austrittsvorrichtung so miteinander zu verbinden, dass die Mischung aus der Eintrags- und Mischvorrichtung so in die Austragsvorrichtung gefördert werden kann, dass diese dort weitergefördert werden kann, ohne dass diese bei der Überführung durch mechanische oder thermische Einflüsse geschädigt wird. Zu diesem Zweck erstreckt sich die in dem Gehäuse der Eintrags- und Mischvorrichtung angeordnete Schneckenwelle durch das Verbindungselement hindurch, um die Mischung durch das Verbindungselement direkt bis zu der Austrittsvorrichtung zu fördern.

Bei den bekannten Misch- und Knetmaschinen wird die in der Eintrags- und Mischvorrichtung hergestellte Mischung bzw. Schmelze vor der Überführung in die Austrittsvorrichtung entgast, um aus der Mischung bzw. Schmelze darin enthaltende Gase und andere leicht flüchtige Bestandteile, wie Restfeuchtigkeit und Monomere, zu entfernen. Bei einer Variante bekannter Misch- und Knetmaschinen ist hierzu an dem - in Förderrichtung gesehen - stromabwärtigen Ende des Gehäuses der Eintrags- und Mischvorrichtung eine Entgasungsvorrichtung vorgesehen, welche einen Unterdruck an die Schmelze bzw. die Mischung (wenn keine Schmelze erzeugt wird) anlegt, um so die flüchtigen Bestandteile aus der Schmelze bzw. die Mischung (wenn keine Schmelze erzeugt wird) abzuziehen. Dies hat jedoch mehrere Nachteile, und zwar insbesondere bei thermisch empfindlichen Schmelzen bzw. Mischungen. Zum einen können dann stromabwärts der Entgasungsvorrichtung, d.h. in dem allerletzten Abschnitt des Gehäuses und in dem Verbindungselement, keine Knetelemente mehr eingesetzt werden, da ansonsten zu viel Energie in die bereits entgaste Schmelze bzw. die Mischung (wenn keine Schmelze erzeugt wird) eingeführt werden würde, was zu einem Temperaturanstieg der Schmelze und aus diesem Grund zu einer thermischen Schädigung der entgasten Schmelze führen würde. Aus diesem Grund werden in den bekannten Misch- und Knetmaschinen dieser Variante in dem stromabwärts der Entgasungsvorrichtung gelegenen Abschnitt des Gehäuses und vor allem in dem Verbindungselement keine Knetelemente mehr vorgesehen, was dazu führt, dass der stromabwärtige Bereich der Eintrags- und Mischvorrichtung, in welchem keine Knetelemente mehr vorgesehen sind, für die Vermischung der Bestandteile der Mischung und Homogenisierung der Mischung zumindest weitgehend verlorengeht. Vielmehr handelt es sich hierbei nur noch um einen reinen Förderabschnitt. Ein weiterer Nachteil dieser Variante ist es, dass die Mischung zum Entgasen bereits vor dem Eintritt in die Austragsvorrichtung, nämlich bereits stromaufwärts des Verbindungselements in dem Abschnitt des Gehäuses, in dem die Entgasungsvorrichtung vorgesehen ist, als Schmelze bzw. die Mischung (wenn keine Schmelze erzeugt wird) vorliegen muss, da sonst keine wirksame Entgasung möglich ist. Auch dies führt dazu, dass der stromabwärts der Entgasungsvorrichtung liegende, von der Schneckenwelle durchdrungene Teil der Eintrags- und Mischvorrichtung der Misch- und Knetmaschine nur noch als reiner Förderabschnitt genutzt werden kann. Zudem wird die Schmelze in dem stromabwärtigen Verbindungselement - trotz des Fehlens von Knetelementen - weiter geschert, was zu einer Erhöhung der Schmelzetemperatur oder gar zu einer thermischen Schädigung der Schmelze, wie insbesondere bei thermisch sensitiven Materialien, wie Polyvinylchlorid (PVC), führen kann. Abgesehen davon ist bei dieser Variante aufgrund des Fehlens von Knetelementen in dem Verbindungselement eine vollständige Abreinigung aller Flanken der Flügelelemente der Schneckenwelle nicht möglich. Dies führt zu Ablagerungen an den Flanken der Flügelelemente und am Übergang der Flügelelemente zu dem Wellenstab. Dies wiederum führt dazu, dass bei einem Wechsel der Ausgangsmaterialien die Spülzeiten für die Misch- und Knetmaschine lang und die Menge des Abfallmaterials groß wird, da der durch die Knetbolzen erzielte "Selbstreinigungseffekt" fehlt. Nicht selten muss die gesamte Eintrags- und Mischvorrichtung der Misch- und Knetmaschine geöffnet und gereinigt werden, um die Abfallmengen zu vermeiden oder, falls Spülen nicht erfolgreich angewendet werden kann, den Wechsel der Ausgangsmaterialien überhaupt erst möglich zu machen.

Bei einer anderen Variante bekannter Misch- und Knetmaschinen wird zur Entgasung zwischen dem Verbindungselement der Eintrags- und Mischvorrichtung und der Austragsvorrichtung ein Entgasungsdom vorgesehen, bei dem die Mischung nach dem Austrag aus der Eintrags- und Mischvorrichtung von oben in einen zylindrischen Turm eingeführt wird und in diesem nach unten auf die Schnecke der Austragsvorrichtung fällt. Allerdings ist diese Variante für die Prozessierung von Schmelze wenig bzw. gar nicht geeignet. Abgesehen davon muss die Schnecke der Austragsvorrichtung sehr groß dimensioniert werden, um alles in den Entgasungsdom fallende Material aus diesem heraus zu fördern. Dies führt zu hohen Investitionskosten dieser Variante.

In der US 5,626,806 wird eine Vorrichtung zum Einbau eines Primäraggegats aus Ruß in ein polymeres Material offenbart, welche ein Schneckengehäuse mit einem zylindrischen Gefäß umfasst, welche eine Schnecke, einen Fülltrichter sowie eine Einbauscher- und -quetschanordnung mit einer Reihe von Scher- und Quetschwerkzeugen umfasst, wobei die Schnecke auch eine Mahlwerkzeugkomponente aufweist, so dass die Zumischung zwischen benachbarten Oberflächen des Mahlwerkzeugs und der Werkzeuge, die sich relativ zueinander in einer Richtung quer zu der Strömungsrichtung der Zumischung entlang des Schraubgefäßes bewegen, gequetscht wird, wobei das Mahlwerkzeug Zähne hat, die in einem peripher beabstandeten Verhältnis von der Schneckenwelle hervorragen.

Ausgehend davon liegt die Aufgabe der vorliegenden Erfindung daher darin, eine für kontinuierliche Aufbereitungsprozesse, wie insbesondere zur Herstellung von Granulat, Strangpressprofilen oder Formteilen, wie Polymergranulat, Polymerstrangpressprofilen oder Polymerformteilen, geeignete Misch- und Knetmaschine bereitzustellen, welche eine optimale Vermischung und Homogenisierung der Bestandteile der Mischung bei einer minimalen Länge der Eintrags- und Mischvorrichtung ermöglicht, so dass sich die Misch- und Knetmaschine durch einen optimalen Wirkungsgrad in Bezug auf Länge der Eintrags- und Mischvorrichtung auszeichnet, und, welche zudem bei einem Wechsel der in die Misch- und Knetmaschine eingesetzten Ausgangsstoffe eine Selbstreinigung der Eintrags- und Mischvorrichtung erleichtert.

Erfindungsgemäß wird diese Aufgabe durch eine Misch- und Knetmaschine nach Anspruch 1 für kontinuierliche Aufbereitungsprozesse, wie zur Herstellung von Granulat, Strangpressprofilen oder Formteilen, wie Polymergranulat, Polymerstrangpressprofilen oder Polymerformteilen, mit einer Eintrags- und Mischvorrichtung und mit einer Austragsvorrichtung gelöst, bei welcher die Eintrags- und Mischvorrichtung ein Gehäuse, eine Schneckenwelle und ein Verbindungselement umfasst, wobei das Verbindungselement an einer Stirnseite des Gehäuses angeordnet ist und zudem mit der Austragsvorrichtung verbunden ist, wobei sowohl in dem Gehäuse als auch in dem Verbindungselement jeweils ein hohler Innenraum ausgebildet ist und sich die Schneckenwelle zumindest abschnittsweise in axialer Richtung durch den Innenraum des Gehäuses sowie zumindest abschnittsweise in axialer Richtung durch den Innenraum des Verbindungselements erstreckt, wobei in dem Gehäuse eine Vielzahl von Knetelementen vorgesehen ist, welche sich von der Innenumfangsfläche des Gehäuses in den Innenraum hinein erstrecken, und wobei die Misch- und Knetmaschine dadurch gekennzeichnet ist, dass auch an der Innenumfangsfläche des Verbindungselements Knetelemente angeordnet sind, welche sich in den Innenraum des Verbindungselements hinein erstrecken, und die Austragsvorrichtung eine Entgasungsvorrichtung aufweist.

Diese Lösung beruht auf der Erkenntnis, dass durch das Anordnen der Entgasungsvorrichtung erst an der Austragsvorrichtung anstelle von an dem, in Förderrichtung gesehen, stromabwärtigen Ende des Gehäuses der Eintrags- und Mischvorrichtung, die Schmelze bzw. Mischung (wenn keine Schmelze erzeugt wird) erst weiter stromabwärts ausgebildet werden muss, so dass die Knetelemente auch an der Innenumfangsfläche des Verbindungselements angeordnet werden können, ohne dass selbst thermisch sensitive Materialien der darin prozessierten Mischung, wie PVC, thermisch geschädigt werden. Die Entgasung findet bei der erfindungsgemäßen Misch- und Knetmaschine nicht mehr in dem Bereich der sich schnell rotierenden und oszillierenden Schneckenwelle in der Eintrags- und Mischvorrichtung statt, sondern in der Austragsvorrichtung, also stromabwärts der sich schnell rotierenden und oszillierenden Schneckenwelle der Eintrags- und Mischvorrichtung. Durch das Anordnen von Knetelementen auch an der Innenumfangsfläche des Verbindungselements steht auch dieser Bereich der Eintrags- und Mischvorrichtung für die Vermischung der Bestandteile der Mischung und für die Homogenisierung der Mischung zur Verfügung, so dass die Länge des Eintrags- und Mischvorrichtung entsprechend verkürzt werden kann, um dennoch den gleichen Misch- und Homogenisierungsgrad wie bei einer entsprechend längeren Eintrags- und Mischvorrichtung, bei der das Verbindungselement keine Knetelemente aufweist, zu erreichen. Somit werden nicht nur die Investitionskosten der Misch- und Knetmaschine erheblich verringert, sondern insbesondere auch die Betriebskosten, da die Eintrags- und Mischvorrichtung aufgrund ihrer geringeren Gesamtlänge weniger Verschleiß sowie einen geringeren Platzbedarf aufweist. Wie dargelegt ist es bei der erfindungsgemäßen Misch- und Knetmaschine auch ausreichend, wenn Schmelze bzw. Mischung (wenn keine Schmelze erzeugt wird) verarbeitet werden soll, dass die Schmelze bzw. Mischung (wenn keine Schmelze erzeugt wird) erst am, in Förderrichtung gesehen, stromabwärtigen des Verbindungselements ausgebildet ist. Auch dies trägt dazu bei, dass die Gesamtlänge des Eintrags- und Mischvorrichtung der Misch- und Knetmaschine, bei gleichem Misch- und Homogenisierungsgrad, signifikant verringert werden kann. Abgesehen davon erlaubt die erfindungsgemäße Misch- und Knetmaschine aufgrund des Vorsehens von Knetelementen auch in dem Verbindungselement eine vollständige Abreinigung aller Flanken der Flügelelemente der Schneckenwelle bis zu deren stromabwärtigen Ende. Dadurch werden Ablagerungen an den Flanken der Flügelelemente und am Übergang der Flügelelemente zu dem Wellenstab der Schneckenwelle auch in dem Verbindungselement zuverlässig vermieden. Dies führt auch dazu, dass bei einem Wechsel der Ausgangsmaterialien die Spülzeiten für die Misch- und Knetmaschine drastisch verkürzt werden. Alles in allem stellt die vorliegende Erfindung eine für kontinuierliche Aufbereitungsprozesse, wie insbesondere zur Herstellung von Granulat, Strangpressprofilen oder Formteilen, wie Polymergranulat, Polymerstrangpressprofilen oder Polymerformteilen, geeignete Misch- und Knetmaschine bereit, welche eine optimale Vermischung und Homogenisierung der Ausgangsstoffe der Mischung bei einer minimalen Länge der Eintrags- und Mischvorrichtung ermöglicht, so dass sich die Misch- und Knetmaschine durch einen optimalen Wirkungsgrad in Bezug auf Länge der Eintrags- und Mischvorrichtung auszeichnet, und, welche zudem bei einem Wechsel der in die Misch- und Knetmaschine eingesetzten Bestandteile eine Reinigung der Eintrags- und Mischvorrichtung erleichtert.

Gemäß einer besonders bevorzugten Ausführungsform der vorliegenden Erfindung ist die Austragsvorrichtung ein vorzugsweise gegenläufiger Doppelschneckenextruder. Bei einem Doppelschneckenextruder bilden sich bei der Drehung beider Schnecken zwischen den Schnecken Kammern aus, durch welche die Mischung in der Austragsvorrichtung nach vorne gefördert wird. Dies deshalb, weil die Schneckenstege und die Wellenstäbe der Schnecken von Doppelschneckenextrudern derart korrespondierend zueinander ausgebildet und ineinandergreifend angeordnet sind, dass sich bei der Rotation der beiden Schnecken zwischen den Schneckenstegen und Wellenstäben der beiden Schnecken in der Förderrichtung wandernde Kammern ausbilden. Es ergibt sich somit eine Zwangsförderung, die es erlaubt, die beiden Schnecken langsam zu rotieren und dennoch die Mischung zuverlässig durch die Austragsvorrichtung zu fördern, so dass nur ein geringfügiger Rückfluss eines Teils der Mischung entgegen der Förderrichtung erfolgt. Aufgrund der langsamen Rotation der beiden Schnecken weist die Mischung in der Austragsvorrichtung, also in dem Bereich der Entgasung, eine vergleichsweise große Verweilzeit und Entgasungsoberfläche auf, so dass eine effiziente Entgasung erreicht wird, ohne dass hohe Scherkräfte in die Mischung eingebracht werden. Dadurch werden thermische Schädigungen der Mischung zuverlässig vermieden. Somit wirkt die in die Austragsvorrichtung verlagerte Entgasungsvorrichtung mit der bevorzugten Ausgestaltung der Austragsvorrichtung als gegenläufiger Doppelschneckenextruder synergistisch zusammen. Ein weiterer Vorteil des Doppelschneckenextruders ist, dass Ablagerungen von Mischungsbestandteilen an der Schneckenwelle im Vergleich zu einem Einwellenextruder signifikant verringert sind, da die Schneckenstege bei dem Doppelschneckenextruder ineinandergreifen.

Besonders gute Ergebnisse werden diesbezüglich erreicht, wenn die Austragsvorrichtung ein gegenläufiger Doppelschneckenextruder ist. Diese haben den Vorteil eines hohen Druckaufbauvermögens von 250 bis 300 bar auf 2 bis 3 D Schneckenlänge (also auf einer dem zwei- bis dreifachen des Schneckenwellendurchmessers entsprechenden Länge) bei gleichzeitig geringfügiger Temperaturerhöhung der Schmelze bzw. Mischung (wenn keine schmelze erzeugt wird). Im Gegensatz dazu drehen gleichläufige Doppelschneckenextruder schnell, weswegen diese eine höhere Scherung ausüben und deutlich weniger Druck aufbauen als gegenläufige Doppelschneckenextruder.

Die Schnecken des gegenläufigen Doppelschneckenextruders können parallel zueinander angeordnet sein.

In Weiterbildung des Erfindungsgedankens wird es vorgeschlagen, dass die beiden Schnecken des Doppelschneckenextruders, in axialer Richtung gesehen, um einem Winkel von 0,1 bis 10°, bevorzugt 0,5 bis 7,5°, besonders bevorzugt 2 bis 5° und höchst bevorzugt 2 bis 3° zueinander geneigt angeordnet, wobei vorzugsweise die beiden Schnecken in der Förderrichtung zusammenlaufen. Bei dieser Ausführungsform kann die Gangtiefe über die Schneckenlänge in Förderrichtung abnehmend oder gleichbleibend ausgebildet werden. Bei einer solchen Ausgestaltung der Schnecken des Doppelschneckenextruders werden die bei dem Betrieb der Austragsvorrichtung zwischen den beiden Schnecken ausgebildeten Kammern in der Förderrichtung sukzessive kleiner bzw. nimmt das Volumen dieser Kammern ab. Dadurch wird die in den Kammern geförderte Mischung in der Förderrichtung zunehmend komprimiert, so dass in der Mischung verbliebene flüchtige Verbindungen, wie insbesondere Gas, Restfeuchte und Monomere, entgegen der Förderrichtung der Austragsvorrichtung, also zu der Entgasungsvorrichtung hin, gedrückt werden. Dies unterstützt die Entgasung entscheidend, so dass das synergistisch Zusammenwirken der in die Austragsvorrichtung verlagerten Entgasungsvorrichtung mit der Ausgestaltung der Austragsvorrichtung als Doppelschneckenextruder sogar noch gesteigert wird.

Gemäß einer weiteren bevorzugten Ausführungsform der vorliegenden Erfindung ist es vorgesehen, dass die Schnecken der Austragsvorrichtung konisch verlaufen, wobei sich die Schnecken in der Förderrichtung verjüngen. Dies unterstützt den Effekt der vorgenannten Ausführungsform, bei der die beiden Schnecken des Doppelschneckenextruders, in axialer Richtung gesehen, nicht parallel, sondern um einem Winkel zueinander geneigt angeordnet sind.

Um eine platzsparende und bezüglich der Länge der Gesamtmaschine signifikant verkürzte Misch- und Knetmaschine zu erreichen, wird es in Weiterbildung des Erfindungsgedankens vorgeschlagen, die beiden Schnecken (bezogen auf ihre axiale Längsrichtung) der Austragsvorrichtung in der horizontalen Ebene in Bezug auf die Schneckenwelle der Eintrags- und Mischvorrichtung um 45° bis 135°, bevorzugt um 60° bis 120°, besonders bevorzugt um 80° bis 100°, ganz besonders bevorzugt um 85° bis 95° und höchst bevorzugt um 90° zu verdrehen, so dass das stirnseitige Ende der sich in dem Verbindungselement erstreckenden Schneckenwelle zu den Außenumfangsflächen der Schnecken der Austragsvorrichtung hin gerichtet sind. Dadurch ist die Austragsvorrichtung rechtwinklig zu der Eintrags- und Mischvorrichtung angeordnet. Neben der dadurch erreichten Platzersparnis hat diese Ausführungsform den Vorteil, dass die in der Eintrags- und Mischvorrichtung hergestellte Mischung von der Schneckenwelle aus dem dem Gehäuse der Eintrags- und Mischvorrichtung gegenüberliegenden Ende des Verbindungselements direkt zwischen die beiden Schnecken der Austragsvorrichtung gefördert werden kann. Dadurch wird ein wirksamer Übergang der Mischung von der Eintrags- und Mischvorrichtung in die Austragsvorrichtung erreicht, was sicherstellt, dass sich nicht Bestandteile der Mischung an anderen Bauteilen absetzen oder dort anbacken. Indem die Entgasungsvorrichtung an der gegenüberliegenden Seite der Austragsvorrichtung angeordnet werden kann, kann zudem die Entgasung direkt bei dem Eintritt der Mischung in die Austragsvorrichtung erfolgen.

Wie dargelegt, sind erfindungsgemäß auch an der Innenumfangsfläche des Verbindungselements der Eintrags- und Mischvorrichtung Knetelemente angeordnet, welche sich in den Innenraum des Verbindungselements hinein erstrecken und dort zusammen mit den auf dem Wellenstab der Schneckenwelle angeordneten Flügelelementen nicht nur eine optimale Vermischung und Homogenisierung der durch die Schneckenwelle geförderten Mischung bewirkt, sondern insbesondere auch eine Ablagerung bzw. ein Anbacken von Bestandteilen der Mischung an den Flanken der Flügelelemente und insbesondere am Übergang der Flanken der Flügelelemente zu der Außenumfangsfläche des Wellenstabs verhindert. Vorzugsweise erstrecken sich die Knetelemente - in der axialen Richtung des Verbindungselements gesehen - weit in das Verbindungselement hinein, um so die Länge des Verbindungselements für das Vermischen und Homogenisieren der Mischung möglichst gut zu nutzen. Zudem ist es bevorzugt, dass die Knetelemente an der Innenumfangsfläche des Verbindungselements in zumindest zwei sich in der axialen Richtung über zumindest einen Abschnitt der Innenumfangsfläche des Verbindungselements erstreckenden Reihen angeordnet sind, um so den Einsatz eines mehrflügligen Schneckenwellenabschnitts in dem Verbindungselement zu erlauben. Vorzugsweise deckt der Abstand von dem ersten bis letzten Knetelement wenigstens einer Reihe in dem Verbindungselement wenigstens 50%, bevorzugt wenigstens 70%, besonders bevorzugt wenigstens 80%, ganz besonders bevorzugt wenigstens 90% und höchst bevorzugt die gesamte axiale Länge der Innenumfangsfläche des Verbindungselements ab. Bevorzugt decken die Abstände von dem ersten bis letzten Knetelement aller Reihen in dem Verbindungselement wenigstens 50%, bevorzugt wenigstens 70%, besonders bevorzugt wenigstens 80%, ganz besonders bevorzugt wenigstens 90% und höchst bevorzugt die gesamte axiale Länge der Innenumfangsfläche des Verbindungselements ab.

Unter einer sich in der axialen Richtung des Verbindungselements oder des Gehäuses der Eintrags- und Mischvorrichtung der Misch- und Knetmaschine über zumindest einen Abschnitt der Innenumfangsfläche des Verbindungselements oder des Gehäuses erstreckenden Reihe von Knetelementen wird im Sinne der vorliegenden Erfindung verstanden, dass eine über die voneinander in axialer Richtung beabstandeten Knetelemente einer Reihe gelegte Verbindungslinie zumindest im Wesentlichen eine Gerade ist, wobei die maximale Abweichung der Verbindungslinie von einer Gerade weniger als 10°, bevorzugt weniger als 5° und weiter bevorzugt weniger als 2° bezogen auf den Querschnittsumfang der Innenumfangsfläche des Verbindungselements oder des Gehäuses der Eintrags- und Mischvorrichtung der Misch- und Knetmaschine beträgt.

Gemäß einer weiteren bevorzugten Ausführungsform der vorliegenden Erfindung ist es vorgesehen, dass auch die Knetelemente an der Innenumfangsfläche des Gehäuses in zumindest zwei sich in der axialen Richtung über zumindest einen Abschnitt der Innenumfangsfläche des Gehäuses erstreckenden Reihen angeordnet sind. Dabei können die Reihen der Knetelemente an der Innenumfangsfläche zumindest des stromabwärtigen Endes des Gehäuses mit den Reihen der Knetelemente an der Innenumfangsfläche des Verbindungselements fluchten, wenn in beiden Abschnitten dieselben Schneckenwellenflügelgeometrien eingesetzt werden. Allerdings ist dies nicht erforderlich, da beispielsweise in dem stromabwärtigen Endes des Gehäuses ein dreiflügliger Schneckenwellenabschnitt eingesetzt werden kann und in dem Verbindungselement ein vierflügliger Schneckenwellenabschnitt oder umgekehrt.

Üblicherweise sind die Eintrags- und Mischvorrichtung der hier beschriebenen Misch- und Knetmaschinen in axialer Richtung in verschiedene Verfahrensabschnitte unterteilt, wobei die Schneckenwelle in jedem Verfahrensabschnitt gemäß dem Verfahrensabschnitt während seines Betriebs zugeordneten Aufgabe mit einer entsprechenden Anzahl bzw. Geometrie an Flügelelementen und die Gehäusewandinnenumfangsfläche mit einer daran angepassten Zahl von Knetelementen besetzt ist. Beispielsweise ist es bekannt, die Schneckenwelle abschnittsweise dreiflüglig und abschnittsweise vierflüglig auszugestalten und entsprechend dazu korrespondierende Abschnitte der Gehäuseinnenwand der Misch- und Knetmaschine mit drei bzw. vier Reihen von Knetelementen auszustatten. Je nachdem, ob sich ein Verfahrensabschnitt über das stromabwärtige Ende des Gehäuses und den stromaufwärtigen Bereich des Verbindungselements der Eintrags- und Mischvorrichtung erstreckt oder ein Verfahrensabschnitt an dem stromabwärtigen Ende des Gehäuses endet und der nächste Verfahrensabschnitt an dem stromaufwärtigen Bereich des Verbindungselements beginnt, fluchten die Reihen der Knetelemente an der Innenumfangsfläche zumindest des stromabwärtigen Endes des Gehäuses mit den Reihen der Knetelemente an der Innenumfangsfläche des Verbindungselements oder nicht.

Vorzugsweise sind an der Innenumfangsfläche des Verbindungselements 2 bis 8, weiter bevorzugt 2 bis 6 und besonders bevorzugt 2, 3, 4 oder 6 sich in der axialen Richtung der Innenumfangsfläche des Verbindungselements erstreckende Reihen von Knetelementen angeordnet. Des Weiteren ist es bevorzugt, dass an der Innenumfangsfläche des Gehäuses 2 bis 8, weiter bevorzugt 2 bis 6 und besonders bevorzugt 2, 3, 4 oder 6 sich in der axialen Richtung der Innenumfangsfläche des Verbindungselements erstreckende Reihen von Knetelementen angeordnet. Dabei müssen nicht alle Abschnitte des Gehäuses in axialer Länge des Gehäuses gesehen die gleiche Anzahl von Reihen aufweisen. Vielmehr können einzelne Abschnitte des Gehäuses verschiedene Anzahlen an Knetelementreihen aufweisen, wobei jedoch vorzugsweise alle Abschnitte 2 bis 8, weiter bevorzugt 2 bis 6 und besonders bevorzugt 2, 3, 4 oder 6 Knetelementreihen aufweisen.

Um die Mischung auch in dem Bereich des Verbindungselements wirksam zu mischen und zu homogenisieren, und, um eine wirksame Überführung der Mischung aus der Eintrags- und Mischvorrichtung in die Austragsvorrichtung zu ermöglichen, wird es in Weiterbildung des Erfindungsgedankens vorgeschlagen, dass sich die Schneckenwelle - von der Stirnseite des Gehäuses, an der das Verbindungselement an dem Gehäuse angeordnet ist, in axialer Richtung gesehen - über zumindest 50%, bevorzugt über zumindest 70%, besonders bevorzugt über zumindest 80%, ganz besonders bevorzugt über zumindest 90% und höchst bevorzugt über die gesamte axiale Länge des Verbindungselements erstreckt.

Wie dargelegt, ist es erfindungsgemäß vorgesehen, dass die Entgasung nicht in dem stromabwärtigen Ende des Gehäuses der Eintrags- und Mischvorrichtung der Misch- und Knetmaschine erfolgt, sondern erst in der Austragsvorrichtung. Daher ist es erfindungsgemäß vorgesehen, dass die Austragsvorrichtung eine Entgasungsvorrichtung aufweist. Daher ist es gemäß der vorliegenden Erfindung bevorzugt, dass das Verbindungselement und zumindest der an das Verbindungselement angrenzende Bereich des Gehäuses, der sich über zumindest 20%, bevorzugt zumindest 40% und besonders bevorzugt zumindest 60% und höchst bevorzugt über die gesamte axiale Länge des Gehäuses erstreckt, keine Entgasungsvorrichtung aufweist. Dies erlaubt es, dass - in Abhängigkeit von der spezifischen Anwendung - im stromaufwärtigen Bereich des Gehäuses eine zusätzliche Entgasungsvorrichtung vorhanden ist, was allerdings nicht bevorzugt ist.

Demnach ist es ganz besonders bevorzugt, dass die gesamte Eintrags- und Mischvorrichtung keine Entgasungsvorrichtung aufweist.

Wie dargelegt, ist die erfindungsgemäße Misch- und Knetmaschine insbesondere zur Herstellung von Granulat, Strangpressprofilen oder Formteilen, wie Polymergranulat, Polymerstrangpressprofilen oder Polymerformteilen geeignet. Daher ist es bevorzugt, dass in der Misch- und Knetmaschine an dem Austragsende der Austragsvorrichtung, also an dem in Förderrichtung gesehen stromabwärtigen Ende der Austragsvorrichtung, eine Vorrichtung angeordnet ist, welche aus der Gruppe ausgewählt ist, die aus Granulationsvorrichtungen, Filtern, Schneidvorrichtungen, Strangdüsen, Profilwerkzeugen, Plattendüsen und Kombinationen hiervon besteht. Dies erlaubt es, die in der Eintrags- und Mischvorrichtung hergestellte und durch die Austragsvorrichtung abgeführte homogene Mischung, wie insbesondere homogene Polymerschmelze, zu Polymergranulat, zu Polymerstrangpressprofilen oder zu Polymerformteilen zu verarbeiten.

Vorzugsweise ist an dem Austragsende der Austragsvorrichtung als Granulationsvorrichtung eine Luft-/Wasser-Granulationsvorrichtung, eine Unterwasser-Granulationsvorrichtung oder eine Stranggranulationsvorrichtung angeordnet. Die Luft-/Wasser-Granulationsvorrichtung kann beispielsweise aus einem Düsenkörper mit einer beheizten Granulationslochplatte, einem Granulationsmesser und Messerantrieb sowie einem Granulatauffanggehäuse mit Luft-, Luft/Wasser-Nebel- oder Wasseranschluss bestehen. Eine solche Granulationsvorrichtung ist insbesondere für PVC, Elastomere und andere hochviskose Schmelzen oder hochgefüllte Polymerformulierungen geeignet. Alternativ dazu ist an dem Austragsende der Austragsvorrichtung als Granulationsvorrichtung eine Unterwasser-Granulationsvorrichtung angeordnet, die eine Düsenplatte und ein daran angrenzendes Wasserbad umfasst. Eine Unterwasser-Granulationsvorrichtung ist insbesondere für klebrige und/oder niedrigviskose Schmelzen geeignet. Alternativ dazu ist an dem Austragsende der Austragsvorrichtung als Granulationsvorrichtung eine Stranggranulationsvorrichtung angeordnet, welche beispielsweise eine Strangdüse, ein Wasserbad und einen Stranggranulator mit Einzugswalzen und Messerwalze umfasst. Eine Stranggranulationsvorrichtung ist insbesondere für niedrigviskose Schmelzen geeignet.

Alternativ dazu kann an dem Austragsende der Austragsvorrichtung auch eine intermittierende Schneidvorrichtung, Strangdüse, Plattendüse, ein Profilwerkzeug oder eine ähnliche Vorrichtung angeordnet sein.

Bezüglich der Ausgestaltung der Entgasungsvorrichtung ist die vorliegende Erfindung nicht limitiert. Demnach können alle Entgasungsvorrichtungen eingesetzt werden, die an die Austragsvorrichtung einer Misch- und Knetmaschine angeschlossen werden können. Vorzugsweise weist die Entgasungsvorrichtung eine Einrichtung zur Erzeugung von Unterdruck auf. Alternativ dazu kann die Entgasungsvorrichtung auch mit einer Einrichtung zur Erzeugung von Unterdruck verbunden sein.

Beispielsweise hat es sich als geeignet erwiesen, dass die Entgasungsvorrichtung der Austragsvorrichtung eine Öffnung im Austragsgehäuse, einen Entgasungsdom, ein an den Entgasungsdom angeschlossenes Vakuumaggregat, einen an den Entgasungsdom angeschlossenen Abscheider, optional ein Falschluftventil, optional ein oder mehrere Sichtgläser und optional eine Anzeige für Unterdruck umfasst. Sowohl der Abscheider als auch das Vakuumaggregat können zwei oder mehrmals vorhanden sein. Als Vakuumaggregat wird bevorzugt eine Vakuumpumpe eingesetzt. Als Vakuumpumpen eignen sich beispielsweise Trockenläufer (wie Roots-Verdichter, Seitenkanalverdichter, Klauenpumpen usw.) oder Wasserringpumpen. Für den Fall der Notwendigkeit des Absaugens großer Mengen an Gas und/oder Flüssigkeit und/oder für den Fall des Einstellens eines vergleichsweise niedrigen Enddrucks von weniger als 50 mbar werden vorzugsweise zwei oder mehr in Reihe geschaltete Vakuumpumpen eingesetzt.

Dabei kann die Entgasungsvorrichtung als Durchlaufsystem oder als Kreislaufsystem ausgebildet sein. Das Durchlaufsystem kann beispielsweise den Entgasungsdom mit einem Verbindungsschlauch, einen Abscheider, eine Vakuumpumpe und eine Frischwasserversorgung umfassen, wobei die Frischwasserversorgung aus einem Wasseranschluss, einem Durchflusswächter, einem 2/2-Magnetventil und einem Drosselventil zur Einstellung der Wassermenge zusammengesetzt sein kann. Das Kreislaufsystem als System mit offenem Kreislauf kann zum Beispiel den Entgasungsdom mit einem Verbindungsschlauch, einen Abscheider, eine Vakuumpumpe und einen Behälter mit Wärmetauscher umfassen. Die Vakuumpumpe saugt das Wasser aus dem Behälter an und fördert das Wasser und etwaige aus der Mischung extrahierte Bestandteile in den Behälter zurück. Das Wasser in dem Behälter wird über einen Wärmetauscher gekühlt. Der Wasserstand im Behälter wird überwacht und ggf. wird Wasser nachgespeist. Damit der Behälter nicht überfüllt werden kann, ist ein druckloser Überlauf vorgesehen.

In Weiterbildung des Erfindungsgedankens wird es vorgeschlagen, die Entgasungsvorrichtung so auszugestalten, dass diese in der Austragsvorrichtung einen Absolutdruck von weniger als 800 mbar, weiter bevorzugt von weniger als 600 mbar, besonders bevorzugt von 50 bis 500 mbar und höchst bevorzugt von 200 bis 400 mbar einstellen und aufrechterhalten kann.

Ein weiterer Gegenstand der vorliegenden Erfindung ist die Verwendung der zuvor beschriebenen Misch- und Knetmaschine zur Herstellung von Granulat, Strangpressprofilen oder Formteilen, wie Polymergranulat, Polymerstrangpressprofilen oder Polymerformteilen nach Anspruch 15.

Nachfolgend wird die vorliegende Erfindung unter Bezug auf die Zeichnung näher beschrieben, in der:
- Fig. 1: eine schematische Draufsicht einer Misch- und Knetmaschine gemäß der vorliegenden Erfindung zeigt,
- Fig. 2: eine perspektivische Ansicht des Gehäuses mit eingesetzter Schneckenwelle der Eintrags- und Mischvorrichtung der in der Figur 1 gezeigten Misch- und Knetmaschine zeigt,
- Fig. 3: einen schematischen Querschnitt eines Ausschnitts des stromabwärtigen Teils der Eintrags- und Mischvorrichtung sowie der Austragsvorrichtung der in der Figur 1 gezeigten Misch- und Knetmaschine zeigt,
- Fig. 4: eine perspektivische und teilweise geschnittene Ansicht des stromabwärtigen Teils der Eintrags- und Mischvorrichtung sowie der Austragsvorrichtung der in der Figur 1 gezeigten Misch- und Knetmaschine zeigt,
- Fig. 5: eine schematische Ansicht eines als Durchlaufsystem ausgestalteten, eine Vakuumpumpe und einen Abscheider umfassenden Abschnitts der Entgasungsvorrichtung zeigt,
- Fig. 6: eine schematische Ansicht eines als Kreislaufsystem ausgestalteten, eine Vakuumpumpe und einen Abscheider umfassenden Abschnitts der Entgasungsvorrichtung zeigt und
- Fig. 7: einen schematischen Querschnitt eines Ausschnitts des stromabwärtigen Teils der Eintrags- und Mischvorrichtung sowie der Austragsvorrichtung einer Misch- und Knetmaschine gemäß dem Stand der Technik zeigt.

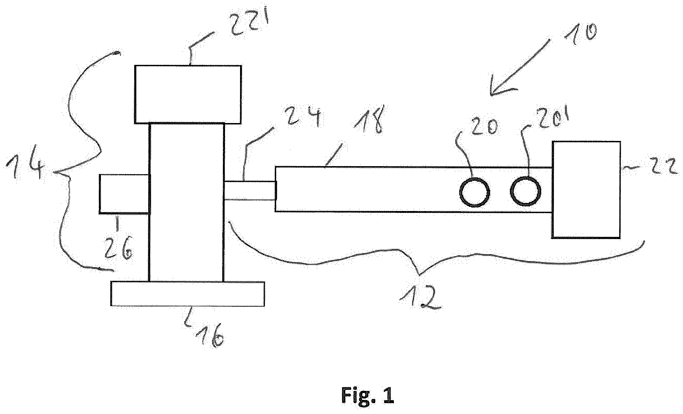

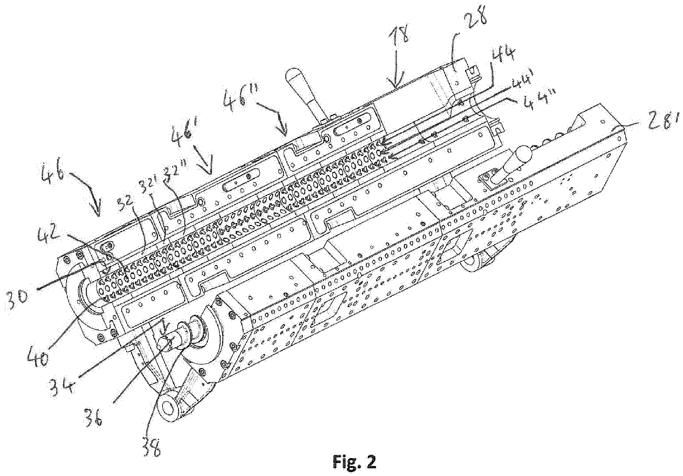

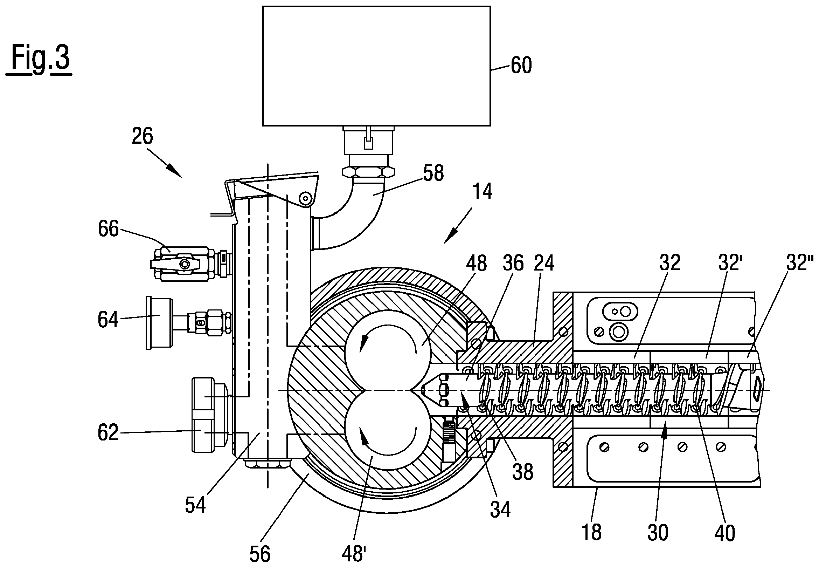

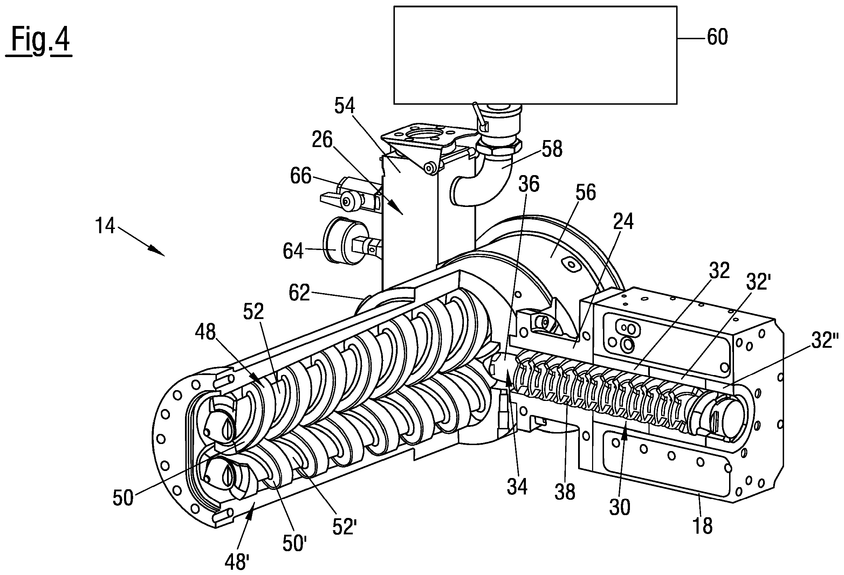

Die in der Figur 1 als schematische Draufsicht gezeigte Misch- und Knetmaschine 10 gemäß der vorliegenden Erfindung umfasst eine Eintrags- und Mischvorrichtung 12, eine Austragsvorrichtung 14 sowie eine Unterwassergranulationsvorrichtung 16. Die Eintrags- und Mischvorrichtung 12 umfasst ein Gehäuse 18, auf dessen Oberseite ein Top-Feeder 20 sowie ein Einfülltrichter 20' zum Zuführen der zu mischenden und knetenden Ausgangsstoffe angeordnet sind. Die Eintrags- und Mischvorrichtung 12 ist im Detail in perspektivischer Ansicht in aufgeklappter Form in der Figur 2 gezeigt und das - in der Förderrichtung gesehen - stromabwärtige Ende der Eintrags- und Mischvorrichtung 12 ist im Querschnitt in den Figuren 3 und 4 gezeigt. An dem stromaufwärtigen Ende des Gehäuses 18 ist ein Antriebsblock 22 angeordnet, der einen Motor sowie ein Getriebe umfasst. Zudem umfasst das Gehäuse 18 ein an dem stromabwärtigen Ende der Gehäusestirnseite angeflanschtes Verbindungselement 24. Erfindungsgemäß ist eine Entgasungsvorrichtung 26 an der Austragsvorrichtung 14 vorgesehen, und zwar an der dem Verbindungselement 24 gegenüberliegenden Seite der Austragsvorrichtung 14. Ferner umfasst auch die Austragsvorrichtung 14 einen Antriebsblock 22'.

Wie im Detail in den Figuren 2 bis 4 gezeigt, umfasst das Gehäuse 18 zwei Gehäusehälften 28, 28', die innen mit einer sogenannten Gehäuseschale 30 ausgekleidet sind, welche aus mehreren axial benachbart angeordneten Gehäuseschalenteilen 32, 32', 32" zusammengesetzt ist. Dabei wird die Gehäuseschale 30 in der vorliegenden Patentanmeldung als Bestandteil des Gehäuses 18 betrachtet. Die Innenumfangsfläche des Gehäuses 18 begrenzt, wenn die beiden Gehäusehälften 28, 28' geschlossen sind, einen zylindrischen hohlen Innenraum, in dem eine Schneckenwelle 34 angeordnet ist. Die Schneckenwelle 34 umfasst einen Wellenstab 36, auf dessen Umfangsfläche Flügelelemente 38 angeordnet sind. In der Innenumfangsfläche der beiden Gehäusehälften 28, 28' sind Knetelemente 40, welche als Knetbolzen 40 ausgebildet sind, vorgesehen. Jedes dieser Knetelemente ist zur Fixierung in jeweils einer in der Wand des Gehäuses 18 vorgesehenen Bohrung angeordnet, welche sich von der Innenumfangsfläche der Gehäuseschale 30 durch die Wand des Gehäuses 18 hindurch erstreckt. Das untere, radial innen liegende Ende jeder Aufnahme 42 kann im Querschnitt vierkantig ausgestaltet sein, wobei jeder Knetbolzen 40 an seinem unteren Ende ein passgenau in das vierkantig ausgestaltete radial innere Ende der Aufnahmen 42 passendes Ende aufweist und dadurch im eingesetzten Zustand verdrehsicher in der Aufnahme 42 fixiert ist. Der Knetbolzen 40 ist an seinem in der Aufnahme 42 liegenden Ende mit einem in dem darüberliegenden Ende der Aufnahme 42 eingesetzten Fixierelement durch Verschrauben verbunden. Wie insbesondere aus der Figur 2 hervorgeht, erstrecken sich die voneinander jeweils gleich beabstandeten Knetbolzen 40 in jeder der beiden Gehäusehälften 28, 28', in der axialen Richtung gesehen, in Form von drei Reihen 44, 44', 44". Das Gehäuse 18 ist vorzugsweise mittels eines oder mehrerer Thermogeräte temperierbar oder mit elektrischen Heizpatronen oder außen am Gehäuse angebrachten Heizplatten beheizbar und ist wasser- oder luftgekühlt, gegebenenfalls auch durch ein anderes Fluid gekühlt, etwa durch ein Öl oder eine sonstige Flüssigkeit oder ein spezielles Gas.

Wie in der Figur 2 gezeigt, ist die Misch- und Knetmaschine in axialer Richtung in mehrere Verfahrensabschnitte 46, 46', 46" unterteilt, wobei jeder Verfahrensabschnitt 46, 46', 46" hinsichtlich der Anzahl an Knetbolzen 40 sowie der Anzahl und der Ausdehnung der Flügelelemente 38 auf dem Wellenstab 34 an die Funktion der einzelnen Verfahrensabschnitte 46, 46', 46" angepasst ist. Wie in der Figur 2 dargestellt, sind in dem linken Abschnitt 46 und in dem rechten Abschnitt 46" der oberen Gehäusehälfte 28 von den drei Reihen 44, 44', 44" von Aufnahmen 42 für Knetbolzen 40 zwei Reihen, nämlich die obere Reihe 44 und die untere Reihe 44", mit Knetbolzen 40 bestückt, wohingegen die mittlere Reihe 44' nicht mit Knetbolzen 40 bestückt ist. Im Unterschied dazu ist in dem mittleren Abschnitt 46 ' der oberen Gehäusehälfte 28 von den drei Reihen 44, 44', 44" von Aufnahmen 42 für Knetbolzen 40 eine Reihe, nämlich die mittlere Reihe 44', mit Knetbolzen 40 bestückt, wohingegen die obere Reihe 44 und die untere Reihe 44" nicht mit Knetbolzen 40 bestückt ist.

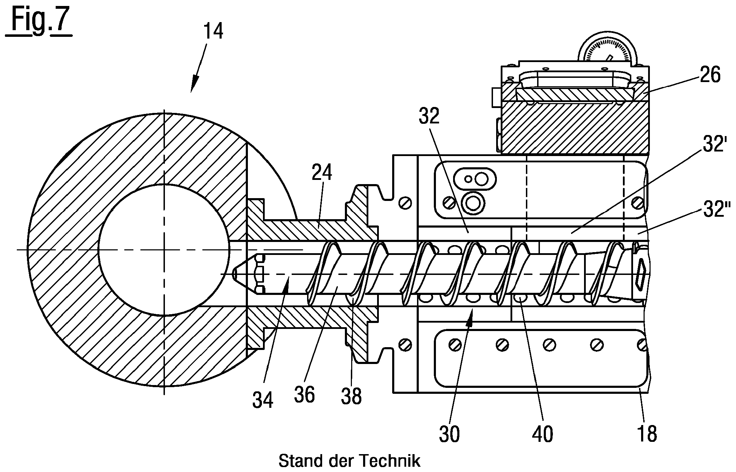

Wie in der Figur 7, die eine Misch- und Knetmaschine gemäß dem Stand der Technik zeigt, gezeigt, ist in den Misch- und Knetmaschinen dieses Typs gemäß dem Stand an dem stromabwärtigen Ende des Gehäuses 18 eine Entgasungsvorrichtung 26 vorgesehen, um die in der Eintrags- und Mischvorrichtung 12 hergestellte Mischung bzw. Schmelze vor der Überführung in die Austrittsvorrichtung 14 zu entgasen, um aus der Mischung bzw. Schmelze darin enthaltende Gase und andere leicht flüchtige Bestandteile, wie Restfeuchtigkeit und Monomere, zu entfernen. Aufgrund der dort angeordneten Entgasungsvorrichtung 26 sind in dem Verbindungselement 24 dieser Misch- und Knetmaschine keine Knetelemente 40 mehr vorgesehen, da ansonsten zu viel Energie in die bereits entgaste Schmelze eingeführt werden würde, was zu einem Temperaturanstieg der Schmelze und aus diesem Grund zu einer thermischen Schädigung der entgasten Schmelze führen würde. Dies führt dazu, dass der stromabwärtige Bereich der Eintrags- und Mischvorrichtung 12, in welchem keine Knetelemente 40 mehr vorgesehen sind, für die Vermischung der Bestandteile der Mischung und Homogenisierung der Mischung zumindest weitgehend verlorengeht. Ein weiterer Nachteil dieser Variante ist es, dass die Mischung zum Entgasen bereits vor dem Eintritt in die Austragsvorrichtung, nämlich bereits stromaufwärts des Verbindungselements 24 in dem Abschnitt des Gehäuses 18, in dem die Entgasungsvorrichtung 26 vorgesehen ist, als Schmelze vorliegen muss, da sonst keine wirksame Entgasung möglich ist. Auch dies führt dazu, dass der stromabwärts der Entgasungsvorrichtung 26 liegende, von der Schneckenwelle 34 durchdrungene Teil der Eintrags- und Mischvorrichtung 12 nur noch als reiner Förderabschnitt genutzt werden kann. Zudem ist bei dieser Variante aufgrund des Fehlens von Knetelementen 40 in dem Verbindungselement 24 eine vollständige Abreinigung aller Flanken der Flügelelemente 38 der Schneckenwelle 34 nicht möglich. Dies führt zu Ablagerungen an den Flanken der Flügelelemente 38 und am Übergang der Flügelelemente 38 zu dem Wellenstab 36. Dies wiederum führt dazu, dass bei einem Wechsel der Ausgangsmaterialien die Spülzeiten für die Misch- und Knetmaschine lang und die Menge des Abfallmaterials groß wird.

Um diese Nachteile zu überwinden, ist erfindungsgemäß, wie in den Figuren 1, 3 und 4 gezeigt, die Entgasungsvorrichtung 26 an der Austragsvorrichtung 14 vorgesehen und sind zudem auch an der Innenumfangsfläche des Verbindungselements 24 Knetelemente 40 angeordnet sind, welche sich in den Innenraum des Verbindungselements 24 hinein erstrecken. Die Entgasung findet bei der erfindungsgemäßen Misch- und Knetmaschine daher nicht mehr in dem Bereich der sich schnell rotierenden und oszillierenden Schneckenwelle 34 in der Eintrags- und Mischvorrichtung 12 statt, sondern in der Austragsvorrichtung 14, also stromabwärts der sich schnell rotierenden und oszillierenden Schneckenwelle 34 der Eintrags- und Mischvorrichtung 12. Durch das Anordnen der Entgasungsvorrichtung 26 erst an der Austragsvorrichtung 14 anstelle von an dem stromabwärtigen Ende des Gehäuses 18 der Eintrags- und Mischvorrichtung 12, muss die Schmelze erst weiter stromabwärts ausgebildet werden, so dass die Knetelemente 40 auch an der Innenumfangsfläche des Verbindungselements 24 angeordnet werden können, ohne dass selbst thermisch sensitive Materialien der darin prozessierten Mischung, wie PVC, thermisch geschädigt werden. Dadurch kann die Länge des Eintrags- und Mischvorrichtung 12 entsprechend verkürzt werden, wodurch sowohl die Investitionskosten als auch die Betriebskosten der Misch- und Knetmaschine 10 erheblich verringert werden. Zudem werden dadurch, neben anderen Vorteilen, Ablagerungen an den Flanken der Flügelelemente 38 und am Übergang der Flügelelemente 38 zu dem Wellenstab 36 der Schneckenwelle 34 auch in dem Verbindungselement 24 zuverlässig vermieden.

Wie in den Figuren 3 und 4 gezeigt, ist die Austragsvorrichtung 14 ein gegenläufiger Doppelschneckenextruder, also einer, welcher zwei sich in der Längsrichtung erstreckende und ineinandergreifende Schnecken 48, 48' aufweist, die bei dem Betrieb der Austragsvorrichtung 14 zueinander gegenläufig rotieren. Die Schnecken 48, 48' weisen Schneckenstege 50, 50' und Wellenstäbe 52, 52' auf, wobei die Schnecken 48, 48' derart korrespondierend zueinander ausgebildet und ineinandergreifend angeordnet sind, dass sich bei der Rotation der beiden Schnecken zwischen den Schneckenstegen 50, 50' und den Wellenstäben 52, 52' der beiden Schnecken 48, 48' in der Förderrichtung wandernde Kammern ausbilden. Es ergibt sich somit eine Zwangsförderung, die es erlaubt, die beiden Schnecken 48, 48' langsam zu rotieren und dennoch die Mischung zuverlässig durch die Austragsvorrichtung zu fördern, so dass ein geringfügiger Rückfluss eines Teils der Mischung entgegen der Förderrichtung erfolgt. Aufgrund der langsamen Rotation der beiden Schnecken weist die Mischung in der Austragsvorrichtung 14, also in dem Bereich der Entgasung, eine vergleichsweise große Verweilzeit sowie eine große Entgasungsoberfläche auf, so dass eine effiziente Entgasung erreicht wird, ohne dass hohe Scherkräfte in die Mischung eingebracht werden. Dadurch werden thermische Schädigungen der Mischung zuverlässig vermieden.

Wie aus der Figur 4 ersichtlich, sind die beiden Schnecken 48, 48' des Doppelschneckenextruders, in axialer Richtung gesehen, nicht parallel, sondern um einem Winkel von 0,1 bis 20°, bevorzugt 0,5 bis 10° und besonders bevorzugt 2 bis 5° zueinander geneigt angeordnet sind, wobei die beiden Schnecken 48, 48' in der Förderrichtung zusammenlaufen.

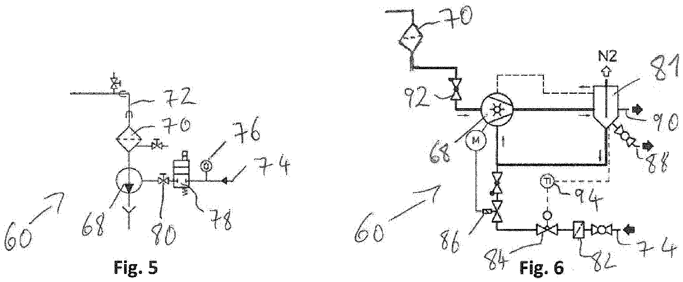

Wie ebenfalls in den Figuren 3 und 4 gezeigt, umfasst die Entgasungsvorrichtung 26 der Austragsvorrichtung 14 einen Entgasungsdom 54, welcher über eine Öffnung (nicht dargestellt) mit dem Gehäuse 56 der Austragsvorrichtung 14 verbunden ist. An den Entgasungsdom 54 ist über einen Schlauch 58 eine eine Vakuumpumpe und einen Abscheider umfassende Einrichtung 60 angeordnet. Zudem umfasst der Entgasungsdom 54 ein Sichtglas 62, eine Anzeige 64 für Unterdruck sowie ein Falschluftventil 66. Durch die in der Einrichtung 60 vorgesehene Vakuumpumpe wird in dem Entgasungsdom 54 der erforderliche Unterdruck eingestellt, wohingegen über den in der Einrichtung 60 vorgesehenen Abscheider Restgas bzw. Restflüssigkeit aus dem Entgasungsdom 54 abgezogen und abgetrennt wird. Dabei kann die Einrichtung 60, wie in der Figur 5 gezeigt, als Durchlaufsystem oder, wie in der Figur 6 gezeigt, als Kreislaufsystem ausgestaltet sein.

Die in der Figur 5 gezeigte als Durchlaufsystem ausgestaltete Einrichtung 60 gemäß einem Ausführungsbeispiel der vorliegenden Erfindung umfasst eine Wasserringpumpe als Vakuumpumpe 68 sowie einen Abscheider 70, welche über eine Schlauchleitung 72 miteinander verbunden sind. Zudem umfasst die Einrichtung 60 dieser Ausführungsform zur Frischwasserversorgung einen Wasseranschluss 74, einen Durchflusswächter 76, ein 2/2-Magnetventil 78 und ein Drosselventil 80 zur Einstellung der Wassermenge.

Die in der Figur 6 gezeigte als Kreislaufsystem ausgestaltete Einrichtung 60 gemäß einem anderen Ausführungsbeispiel der vorliegenden Erfindung umfasst eine Wasserringpumpe als Vakuumpumpe 68 sowie einen Abscheider 70. Zudem umfasst die Einrichtung 60 dieser Ausführungsform einen Behälter mit Wärmetauscher 81, zur Frischwasserversorgung einen Wasseranschluss 74, einen Schmutzfänger 82, ein Regelventil 84, ein 2/2-Absperrventil 86, ein Entleerventil 88, einen Überlauf 90, ein Rückschlagventil 92 sowie einen Temperaturregler 94. Die Vakuumpumpe 68 saugt das Wasser aus dem Behälter 81 an und fördert das Wasser und etwaige aus der Mischung extrahierte Bestandteile in den Behälter 81 zurück. Das Wasser in dem Behälter 81 wird über den Wärmetauscher gekühlt. Der Wasserstand im Behälter 81 wird überwacht und ggf. wird Wasser nachgespeist. Damit der Behälter 81 nicht überfüllt werden kann, ist der drucklose Überlauf 90 vorgesehen.

### Bezugszeichenliste

- 10: Misch- und Knetmaschine
- 12: Eintrags- und Mischvorrichtung
- 14: Austragsvorrichtung
- 16: (Unterwasser)granulationsvorrichtung
- 18: Gehäuse
- 20: Top-Feeder
- 20': Einfülltrichter
- 22, 22': Antriebsblock
- 24: Verbindungselement
- 26: Entgasungsvorrichtung
- 28,28': Gehäusehälften
- 30: Gehäuseschale
- 32, 32', 32": Gehäuseschalenteil
- 34: Schneckenwelle
- 36: Wellenstab
- 38: Flügelelemente
- 40: Knetelement / Knetbolzen
- 42: Aufnahme für Knetelement
- 44, 44', 44": Reihe von Knetelementen
- 46, 46', 46": Verfahrensabschnitte
- 48, 48': Schnecken der Austragsvorrichtung
- 50, 50': Schneckensteg einer Schnecke der Austragsvorrichtung
- 52, 52': Wellenstab einer Schnecke der Austragsvorrichtung
- 54: Entgasungsdom
- 56: Gehäuse der Austragsvorrichtung
- 58: Schlauch
- 60: Vakuumpumpe und Abscheider umfassende Einrichtung
- 62: Sichtglas
- 64: Anzeige für Unterdruck
- 66: Falschluftventil
- 68: Vakuumpumpe
- 70: Abscheider
- 72: Schlauchleitung
- 74: (Frisch)Wasseranschluss
- 76: Durchflusswächter
- 78: 2/2-Magnetventil
- 80: Drosselventil
- 81: Behälter mit Wärmetauscher
- 82: Schmutzfänger
- 84: Regelventil
- 86: 2/2-Absperrventil
- 88: Entleerventil
- 90: Überlauf
- 92: Rückschlagventil
- 94: Temperaturregler

## Patentansprüche

1. Misch- und Knetmaschine (10) für kontinuierliche Aufbereitungsprozesse, wie zur Herstellung von Granulat, Strangpressprofilen oder Formteilen, wie Polymergranulat, Polymerstrangpressprofilen oder Polymerformteilen, mit einer Eintrags- und Mischvorrichtung (12) und mit einer Austragsvorrichtung (14), wobei die Eintrags- und Mischvorrichtung (12) ein Gehäuse (18), eine Schneckenwelle (34) und ein Verbindungselement (24) umfasst, wobei das Verbindungselement (24) an einer Stirnseite des Gehäuses (18) angeordnet ist und zudem mit der Austragsvorrichtung (14) verbunden ist, wobei sowohl in dem Gehäuse (18) als auch in dem Verbindungselement (24) jeweils ein hohler Innenraum ausgebildet ist und sich die Schneckenwelle (34) zumindest abschnittsweise in axialer Richtung durch den Innenraum des Gehäuses (18) sowie zumindest abschnittsweise in axialer Richtung durch den Innenraum des Verbindungselements (24) erstreckt, und wobei in dem Gehäuse (18) eine Vielzahl von Knetelementen (40) vorgesehen ist, welche sich von der Innenumfangsfläche des Gehäuses (18) in den Innenraum hinein erstrecken,
**dadurch gekennzeichnet, dass**
auch an der Innenumfangsfläche des Verbindungselements (24) Knetelemente (40) angeordnet sind, welche sich in den Innenraum des Verbindungselements (24) hinein erstrecken, und die Austragsvorrichtung (14) eine Entgasungsvorrichtung (26) aufweist.

2. Misch- und Knetmaschine (10) nach Anspruch 1, **dadurch gekennzeichnet, dass** die Austragsvorrichtung (14) ein Doppelschneckenextruder ist.

3. Misch- und Knetmaschine (10) nach Anspruch 2, **dadurch gekennzeichnet, dass** die Austragsvorrichtung (14) ein gegenläufiger Doppelschneckenextruder ist.

4. Misch- und Knetmaschine (10) nach Anspruch 2 oder 3, **dadurch gekennzeichnet, dass** die beiden Schnecken des Doppelschneckenextruders, in axialer Richtung gesehen, nicht parallel, sondern um einem Winkel von 0,1 bis 20°, bevorzugt 0,5 bis 10° und besonders bevorzugt 2 bis 5° zueinander geneigt angeordnet sind, wobei vorzugsweise die beiden Schnecken in der Förderrichtung zusammenlaufen.

5. Misch- und Knetmaschine (10) nach einem der Ansprüche 2 bis 4, **dadurch gekennzeichnet, dass** die Schnecken der Austragsvorrichtung (14) konisch verlaufen, wobei sich die Schnecken in der Förderrichtung verjüngen.

6. Misch- und Knetmaschine (10) nach einem der Ansprüche 2 bis 5, **dadurch gekennzeichnet, dass** die Schnecken der Austragsvorrichtung (14) in der horizontalen Ebene in Bezug auf die Schneckenwelle der Eintrags- und Mischvorrichtung um 45° bis 135°, bevorzugt um 60° bis 120°, besonders bevorzugt um 80° bis 100°, ganz besonders bevorzugt um 85° bis 95° und höchst bevorzugt um 90° verdreht sind, so dass das stirnseitige Ende der sich in dem Verbindungselement (24) erstreckenden Schneckenwelle (34) zu den Außenumfangsflächen der Schnecken der Austragsvorrichtung (14) hin gerichtet ist.

7. Misch- und Knetmaschine (10) nach einem der vorhergehenden Ansprüche, **dadurch gekennzeichnet, dass** die Knetelemente (40) an der Innenumfangsfläche des Verbindungselements (24) in zumindest zwei sich in der axialen Richtung über zumindest einen Abschnitt der Innenumfangsfläche des Verbindungselements (24) erstreckenden Reihen (44, 44', 44") angeordnet sind, wobei der Abstand von dem ersten bis letzten Knetelement (40) wenigstens einer Reihe wenigstens 50%, bevorzugt wenigstens 70%, besonders bevorzugt wenigstens 80%, ganz besonders bevorzugt wenigstens 90% und höchst bevorzugt die gesamte axiale Länge der Innenumfangsfläche des Verbindungselements (24) abdeckt.

8. Misch- und Knetmaschine (10) nach Anspruch 7, **dadurch gekennzeichnet, dass** auch die Knetelemente (40) an der Innenumfangsfläche des Gehäuses (18) in zumindest zwei sich in der axialen Richtung über zumindest einen Abschnitt der Innenumfangsfläche des Gehäuses (18) erstreckenden Reihen (44, 44', 44") angeordnet sind, wobei vorzugsweise die Reihen (44, 44', 44") der Knetelemente (40) an der Innenumfangsfläche zumindest des stromabwärtigen Endes des Gehäuses (18) mit den Reihen (44, 44', 44") der Knetelemente (40) an der Innenumfangsfläche des Verbindungselements (24) fluchten, wobei vorzugsweise an der Innenumfangsfläche des Verbindungselements (24) 2 bis 8, bevorzugt 2 bis 6 und besonders bevorzugt 2, 3, 4 oder 6 sich in der axialen Richtung der Innenumfangsfläche des Verbindungselements (24) erstreckende Reihen (44, 44', 44") von Knetelementen (40) angeordnet sind.

9. Misch- und Knetmaschine (10) nach einem der vorhergehenden Ansprüche, **dadurch gekennzeichnet, dass** sich die Schneckenwelle (34) - von der Stirnseite des Gehäuses (18), an der das Verbindungselement (24) an dem Gehäuse (18) angeordnet ist, in axialer Richtung gesehen - über zumindest 50%, bevorzugt über zumindest 70%, besonders bevorzugt über zumindest 80%, ganz besonders bevorzugt über zumindest 90% und höchst bevorzugt über die gesamte axiale Länge des Verbindungselements (24) erstreckt.

10. Misch- und Knetmaschine (10) nach einem der vorhergehenden Ansprüche, **dadurch gekennzeichnet, dass** das Verbindungselement (24) und zumindest der an das Verbindungselement (24) angrenzende Bereich des Gehäuses (18), der sich über zumindest 20%, bevorzugt zumindest 40% und besonders bevorzugt zumindest 60% und höchst bevorzugt über die gesamte axiale Länge des Gehäuses (18) erstreckt, keine Entgasungsvorrichtung aufweist.

11. Misch- und Knetmaschine (10) nach Anspruch 10, **dadurch gekennzeichnet, dass** die gesamte Eintrags- und Mischvorrichtung (12) keine Entgasungsvorrichtung aufweist.

12. Misch- und Knetmaschine (10) nach einem der vorhergehenden Ansprüche, **dadurch gekennzeichnet, dass** an dem Austragsende der Austragsvorrichtung (14) eine Vorrichtung angeordnet ist, welche aus der Gruppe ausgewählt ist, die aus Granulationsvorrichtungen, Filtern, Schneidvorrichtungen, Strangdüsen, Profilwerkzeugen, Plattendüsen und Kombinationen hiervon besteht, wobei vorzugsweise die Granulationsvorrichtung (16) eine Luft-/Wasser-Granulationsvorrichtung, eine Unterwasser-Granulationsvorrichtung oder eine Stranggranulationsvorrichtung ist.

13. Misch- und Knetmaschine (10) nach einem der vorhergehenden Ansprüche, **dadurch gekennzeichnet, dass** die Entgasungsvorrichtung (26) eine Einrichtung zur Erzeugung von Unterdruck aufweist oder mit einer Einrichtung zur Erzeugung von Unterdruck verbunden ist.

14. Misch- und Knetmaschine (10) nach einem der vorhergehenden Ansprüche, **dadurch gekennzeichnet, dass** die Entgasungsvorrichtung (26) so ausgestaltet ist, dass sie in der Austragsvorrichtung (14) einen Absolutdruck von weniger als 800 mbar, bevorzugt von weniger als 600 mbar, besonders bevorzugt von 50 bis 500 mbar und höchst bevorzugt von 200 bis 400 mbar einstellen und aufrechterhalten kann.

15. Verwendung der in einem der vorhergehenden Ansprüche beanspruchten Misch- und Knetmaschine zur Herstellung von Granulat, Strangpressprofilen oder Formteilen, wie Polymergranulat, Polymerstrangpressprofilen oder Polymerformteilen.

## Claims

1. A mixing and kneading machine (10) for continuous preparation processes, such as for the production of granules, extruded profiles or molded parts, such as polymer granules, polymer extruded profiles or polymer molded parts, comprising an input and mixing device (12) and comprising a discharge device (14), the input and mixing device (12) having a housing (18), a screw shaft (34) and a connecting element (24), the connecting element (24) being arranged on an end face of the housing (18) and also being connected to the discharge device (14), a hollow interior being formed both in the housing (18) and in the connecting element (24) and the screw shaft (34) extending at least in portions in the axial direction through the interior of the housing (18) and at least in portions in the axial direction through the interior of the connecting element (24), and a plurality of kneading elements (40) being provided in the housing (18), which kneading elements extend from the inner circumferential surface of the housing (18) into the interior, **characterized in that** kneading elements (40) are also arranged on the inner circumferential surface of the connecting element (24), which kneading elements extend into the interior of the connecting element (24), and the discharge device (14) has a degassing device (26).

2. The mixing and kneading machine (10) according to claim 1, **characterized in that** the discharge device (14) is a twin-screw extruder.

3. The mixing and kneading machine (10) according to claim 2, **characterized in that** the discharge device (14) is a counter-rotating twin-screw extruder.

4. The mixing and kneading machine (10) according to claim 2 or 3, **characterized in that** the two screws of the twin-screw extruder, viewed in the axial direction, are not parallel, but are inclined with respect to one another at an angle of 0.1 to 20°, preferably 0.5 to 10° and particularly preferably 2 to 5°, the two screws preferably converging in the conveying direction.

5. The mixing and kneading machine (10) according to one of claims 2 to 4, **characterized in that** the screws of the discharge device (14) are conical, the screws tapering in the conveying direction.

6. The mixing and kneading machine (10) according to one of claims 2 to 5, **characterized in that** the screws of the discharge device (14) are rotated in the horizontal plane by 45° to 135°, preferably by 60° to 120°, particularly preferably by 80° to 100°, very particularly preferably by 85° to 95° and most preferably by 90°, in relation to the screw shaft of the input and mixing device, such that the end face of the screw shaft (34) extending in the connecting element (24) is directed toward the outer circumferential surfaces of the screws of the discharge device (14).

7. The mixing and kneading machine (10) according to one of the preceding claims, **characterized in that** the kneading elements (40) on the inner circumferential surface of the connecting element (24) are arranged in at least two rows (44, 44', 44") extending in the axial direction over at least a portion of the inner circumferential surface of the connecting element (24), the distance from the first to the last kneading element (40) of at least one row covering at least 50%, preferably at least 70%, particularly preferably at least 80%, very particularly preferably at least 90% and most preferably the entire axial length of the inner circumferential surface of the connecting element (24).

8. The mixing and kneading machine (10) according to claim 7, **characterized in that** the kneading elements (40) on the inner circumferential surface of the housing (18) are also arranged in at least two rows (44, 44', 44") extending in the axial direction over at least a portion of the inner circumferential surface of the housing (18), the rows (44, 44', 44") of the kneading elements (40) on the inner circumferential surface at least of the downstream end of the housing (18) preferably being aligned with the rows (44, 44', 44") of the kneading elements (40) on the inner circumferential surface of the connecting element (24), preferably 2 to 8, preferably 2 to 6 and particularly preferably 2, 3, 4 or 6 rows (44, 44', 44") of kneading elements (40) extending in the axial direction of the inner circumferential surface of the connecting element (24) being arranged on the inner circumferential surface of the connecting element (24).

9. The mixing and kneading machine (10) according to one of the preceding claims, **characterized in that** the screw shaft (34) - viewed in the axial direction from the end face of the housing (18) at which the connecting element (24) is arranged on the housing (18) - extends over at least 50%, preferably over at least 70%, particularly preferably over at least 80%, very particularly preferably over at least 90% and most preferably over the entire axial length of the connecting element (24).

10. The mixing and kneading machine (10) according to one of the preceding claims, **characterized in that** the connecting element (24) and at least the region of the housing (18) adjoining the connecting element (24), which region extends over at least 20%, preferably at least 40% and particularly preferably at least 60% and most preferably over the entire axial length of the housing (18), have no degassing device.

11. The mixing and kneading machine (10) according to claim 10, **characterized in that** the entire input and mixing device (12) does not have a degassing device.

12. The mixing and kneading machine (10) according to one of the preceding claims, **characterized in that** a device is arranged at the discharge end of the discharge device (14) which is selected from the group consisting of granulation devices, filters, cutting devices, strand nozzles, profile tools, roller dies and combinations thereof, the granulation device (16) preferably being an air/water granulation device, an underwater granulation device or a strand granulation device.

13. The mixing and kneading machine (10) according to one of the preceding claims, **characterized in that** the degassing device (26) has a means for generating negative pressure or is connected to a means for generating negative pressure.

14. The mixing and kneading machine (10) according to one of the preceding claims, **characterized in that** the degassing device (26) is designed such that it can set and maintain an absolute pressure in the discharge device (14) of less than 800 mbar, preferably less than 600 mbar, particularly preferably from 50 to 500 mbar and most preferably from 200 to 400 mbar.

15. The use of the mixing and kneading machine claimed in one of the preceding claims for the production of granules, extruded profiles or molded parts, such as polymer granules, polymer extruded profiles or polymer molded parts.

## Revendications

1. Machine de mélange et de malaxage (10) destinée à des processus de préparation en continu tels la production de granulés, de profilés extrudés ou de pièces moulées, tels que des granulés polymères, des profilés extrudés polymères ou des pièces moulées polymères, comportant un dispositif d'entrée et de mélange (12) et un dispositif de sortie (14), le dispositif d'entrée et de mélange (12) comprenant un boîtier (18), un arbre à vis (34) et un élément de liaison (24), l'élément de liaison (24) étant disposé sur une face frontale du boîtier (18) et étant également relié au dispositif de sortie (14), un espace intérieur creux étant réalisé à la fois dans le boîtier (18) et dans l'élément de liaison (24) et l'arbre à vis (34) s'étendant au moins par sections à travers l'espace intérieur du boîtier (18) dans la direction axiale et au moins par sections à travers l'espace intérieur de l'élément de liaison (24) dans la direction axiale, et une pluralité d'éléments de malaxage (40) étant prévus dans le boîtier (18), lesquels éléments de malaxage s'étendent dans l'espace intérieur depuis la surface circonférentielle intérieure du boîtier (18), **caractérisée en ce que**
des éléments de malaxage (40) sont également disposés sur la surface circonférentielle intérieure de l'élément de liaison (24), lesquels éléments de malaxage s'étendent dans l'espace intérieur de l'élément de liaison (24), et le dispositif de sortie (14) présentant un dispositif de dégazage (26).

2. Machine de mélange et de malaxage (10) selon la revendication 1, **caractérisée en ce que** le dispositif de sortie (14) est une extrudeuse bi-vis.

3. Machine de mélange et de malaxage (10) selon la revendication 2, **caractérisée en ce que** le dispositif de sortie (14) est une extrudeuse bi-vis contrarotative.

4. Machine de mélange et de malaxage (10) selon la revendication 2 ou 3, **caractérisée en ce que** les deux vis de l'extrudeuse bi-vis, vues dans la direction axiale, ne sont pas disposées de manière parallèle mais de manière inclinée l'une par rapport à l'autre à un angle de 0,1 à 20°, de préférence de 0,5 à 10° et de manière particulièrement préférée de 2 à 5°, les deux vis convergeant préférablement dans la direction de transport.

5. Machine de mélange et de malaxage (10) selon l'une des revendications 2 à 4, **caractérisée en ce que** les vis du dispositif de sortie (14) sont coniques, les vis se rétrécissant dans la direction de transport.

6. Machine de mélange et de malaxage (10) selon l'une des revendications 2 à 5, **caractérisée en ce que** les vis du dispositif de sortie (14) sont vissées dans le plan horizontal, par rapport à l'arbre à vis du dispositif d'entrée et de mélange, de 45° à 135°, de préférence de 60° à 120°, de manière particulièrement préférée de 80° à 100°, de manière tout particulièrement préférée de 85° à 95° et le plus préférablement de 90°, de sorte que l'extrémité de face frontale de l'arbre à vis (34) s'étendant dans l'élément de liaison (24) est orientée vers les surfaces circonférentielles extérieures des vis du dispositif de sortie (14).

7. Machine de mélange et de malaxage (10) selon l'une des revendications précédentes, **caractérisée en ce que** les éléments de malaxage (40) sur la surface circonférentielle intérieure de l'élément de liaison (24) sont disposés en au moins deux rangées (44, 44', 44") s'étendant, dans la direction axiale, sur au moins une section de la surface circonférentielle intérieure de l'élément de liaison (24), la distance entre le premier et le dernier élément de malaxage (40) d'au moins une rangée couvrant au moins 50 %, de préférence au moins 70 %, de manière particulièrement préférée au moins 80 %, de manière tout particulièrement préférée au moins 90 % et le plus préférablement toute la longueur axiale de la surface circonférentielle intérieure de l'élément de liaison (24).

8. Machine de mélange et de malaxage (10) selon la revendication 7, **caractérisée en ce que** les éléments de malaxage (40) sur la surface circonférentielle intérieure du boîtier (18) sont aussi disposés en au moins deux rangées (44, 44', 44") s'étendant, dans la direction axiale, sur au moins une section de la surface circonférentielle intérieure du boîtier (18), les rangées (44, 44', 44") des éléments de malaxage (40) sur la surface circonférentielle intérieure d'au moins l'extrémité aval du boîtier (18) étant préférablement alignées avec les rangées (44, 44', 44") des éléments de malaxage (40) sur la surface circonférentielle intérieure de l'élément de liaison (24), et préférablement 2 à 8, de préférence 2 à 6 et de manière particulièrement préférée 2, 3, 4 ou 6 rangées (44, 44', 44") d'éléments de malaxage (40), s'étendant dans la direction axiale de la surface circonférentielle intérieure de l'élément de liaison (24), étant disposées sur la surface circonférentielle intérieure de l'élément de liaison (24).

9. Machine de mélange et de malaxage (10) selon l'une des revendications précédentes, **caractérisée en ce que** l'arbre à vis (34) s'étend, vu dans la direction axiale depuis la face frontale du boîtier (18) sur laquelle l'élément de liaison (24) est disposé sur le boîtier (18), sur au moins 50 %, de préférence sur au moins 70 %, de manière particulièrement préférée sur au moins 80 %, de manière tout particulièrement préférée sur au moins 90 % et le plus préférablement sur toute la longueur axiale de l'élément de liaison (24).

10. Machine de mélange et de malaxage (10) selon l'une des revendications précédentes, **caractérisée en ce que** l'élément de liaison (24) et au moins la zone du boîtier (18) attenante à l'élément de liaison (24), laquelle zone s'étend sur au moins 20 %, de préférence sur au moins 40 %, de manière particulièrement préférée sur au moins 60 % et le plus préférablement sur toute la longueur axiale du boîtier (18), ne présentent pas de dispositif de dégazage.

11. Machine de mélange et de malaxage (10) selon la revendication 10, **caractérisée en ce que** l'ensemble du dispositif d'entrée et de mélange (12) ne présente pas de dispositif de dégazage.

12. Machine de mélange et de malaxage (10) selon l'une des revendications précédentes, **caractérisée en ce qu'**un dispositif est disposé à l'extrémité de sortie du dispositif de sortie (14), lequel dispositif est choisi dans le groupe constitué des dispositifs de granulation, des filtres, des dispositifs de coupe, des buses à brins, des outils profilés, des buses à plaques et leurs associations, le dispositif de granulation (16) étant préférablement un dispositif de granulation air/eau, un dispositif de granulation sous l'eau ou un dispositif de granulation à brins.

13. Machine de mélange et de malaxage (10) selon l'une des revendications précédentes, **caractérisée en ce que** le dispositif de dégazage (26) présente un système de génération de pression négative ou est relié à un système de génération de pression négative.

14. Machine de mélange et de malaxage (10) selon l'une des revendications précédentes, **caractérisée en ce que** le dispositif de dégazage (26) est conçu de telle sorte qu'il peut établir et conserver dans le dispositif de sortie (14) une pression absolue inférieure à 800 mbar, de préférence inférieure à 600 mbar, de manière particulièrement préférée de 50 à 500 mbar et le plus préférablement de 200 à 400 mbar.

15. Utilisation de la machine de mélange et de malaxage selon l'une des revendications précédentes pour la production de granulés, de profilés extrudés ou de pièces moulées, tels que des granulés polymères, des profilés extrudés polymères ou des pièces moulées polymères.
